# EUROPÄISCHE PATENTSCHRIFT

(11) **EP 3 341 528 B1**
(45) Veröffentlichungstag und Bekanntmachung des Hinweises auf die Patenterteilung: **03.08.2022**
(21) Anmeldenummer: 16757269.2
(22) Anmeldetag: 29.08.2016
(51) Int. Cl.: E02D 27/42, F03D 13/20

(54) **WINDENERGIEANLAGE**
WIND TURBINE
ÉOLIENNE

(30) Priorität: 27.08.2015 DE 102015216444
(43) Veröffentlichungstag der Anmeldung: 04.07.2018
(73) Patentinhaber: Wobben Properties GmbH, 26607 Aurich (DE)
(72) Erfinder: COORDES, Thomas, 26632 Ihlow (DE); POLLMANN, Frank, 22391 Hamburg (DE)
(74) Vertreter: Eisenführ Speiser
(86) Internationale Anmeldenummer: PCT/EP2016/070296
(87) Internationale Veröffentlichungsnummer: WO 2017/032904

(56) Entgegenhaltungen:
- EP-A1- 1 526 278
- EP-A1- 2 821 565
- DE-U1-202009 013 844

## Beschreibung

Die vorliegende Erfindung betrifft eine Windenergieanlage.

Bevor ein Turm einer Windenergieanlage errichtet wird, muss ein entsprechendes Betonfundament im Boden vorgesehen sein. Das Fundament wird typischerweise mit Beton vor Ort (Ortbeton) gegossen. Nachdem der Beton ausgehärtet ist, kann ein erstes Turmsegment des Turms der Windenergieanlage auf dem Fundament platziert werden.

WO 2012/035206 A1 zeigt eine Windenergieanlage sowie ein Fundament einer Windenergieanlage.

In der prioritätsbegründenden deutschen Patentanmeldung hat das Deutsche Patent- und Markenamt die folgenden Dokumente recherchiert: DE 10 2007 060 379 B4, DE 10 2013 211 750 A1, DE 20 2009 013 844 U1, EP 2 375 057 A1, EP 2 821 565 A1, WO 2012/ 035 206 A1, CN 203 924 104 U und CN 203924104 U. Das vorhin genannte Dokument EP2821565A1 bzw. DE20 2009 013 844U1 oder EP1526278A1 offenbart eine Windenergieanlage, mit einem Fundament, wobei das Fundament einen ersten Fundamentabschnitt mit einer Oberseite und einen Betonfundamentsockel mit einer Oberseite aufweist, wobei die Oberseite des Betonfundamentsockels ringförmig ausgestaltet ist und über die Oberseite des ersten Fundamentabschnitts hinausragt, einem Stahlturm mit einen Flansch umfassend eine Mehrzahl von Durch- gangsbohrungen, einer Mehrzahl von Spannelemente, wobei untere Enden der Spannelemente mittels erster Befestigungseinheiten in oder unter dem ersten Fundamentabschnitt befestigt sind, wobei obere Enden der Spannelemente (320, 302) über das obere Ende des Betonfundamentsockels hinausragen und durch die Durchgangsbohrungen verlaufen, wobei die oberen Enden der Spannelemente mittels zweiter Befestigungseinheiten verspannt sind, wobei in dem Betonfundamentsockel und in dem Fundamentabschnitt eine Mehrzahl von Bohrungen zur Aufnahme der Spannelemente vorgesehen sind, wobei die Bohrungen im Bereich des Betonfundamentsockels Durchgangsbohrungen sind.

Es ist eine Aufgabe der vorliegenden Erfindung, eine Windenergieanlage bzw. einen Turm einer Windenergieanlage mit einem verbesserten Fundament vorzusehen.

Diese Aufgabe wird durch eine Windenergieanlage nach Anspruch 1 und ein Verfahren zum Errichten einer Windenergieanlage nach Anspruch 3 gelöst.

Somit wird eine Windenergieanlage mit einem Fundament vorgesehen. Das Fundament weist einen ersten Fundamentabschnitt mit einer Oberseite und einen Betonfundamentsockel mit einer Oberseite auf. Die Oberseite des Betonfundamentsockels ist ringförmig ausgestaltet und ragt über die Oberseite des ersten Fundamentabschnittes hinaus. Die Windenergieanlage weist ferner einen Stahlturm mit einer Mehrzahl von Turmsegmenten auf, wobei ein unteres Turmsegment einen Flansch mit einer Mehrzahl von Durchgangsbohrungen aufweist. Der Flansch wird auf einer Oberseite des Betonfundaments platziert. Die Windenergieanlage weist ferner eine Mehrzahl von Spannelementen auf. Ein unteres Ende der Spannelemente ist mittels einer Befestigungseinheit in oder unter dem ersten Fundamentabschnitt befestigt. Ein oberes Ende der Spannelemente ragt über ein oberes Ende des Betonfundamentsockels hinaus und verläuft durch die Durchgangslöcher. Die oberen Enden der Spannelemente werden mittels Befestigungseinheiten verspannt. Die Außenseite des Betonfundamentsockels ist konisch ausgestaltet. In dem Betonsockel und in dem Fundamentabschnitt ist eine Mehrzahl von Bohrungen zur Aufnahme der Spannelemente vorgesehen. Die Bohrungen im Bereich des Betonsockels sind Durchgangsbohrungen, durch die gesamte Höhe des Betonsockels,

Gemäß einem Aspekt der vorliegenden Erfindung sind die Spannelemente als Gewindestangen oder als Spannlitzen ausgestaltet.

Gemäß der vorliegenden Erfindung ist die Höhe des Betonfundamentsockels größer als 2 m.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Schnittansicht eines Windenergieanlagen-Fundaments gemäß einem ersten Ausführungsbeispiel, und
- Fig. 3: zeigt eine Schnittansicht eines Windenergieanlagen-Fundaments gemäß einem zweiten Ausführungsbeispiel.

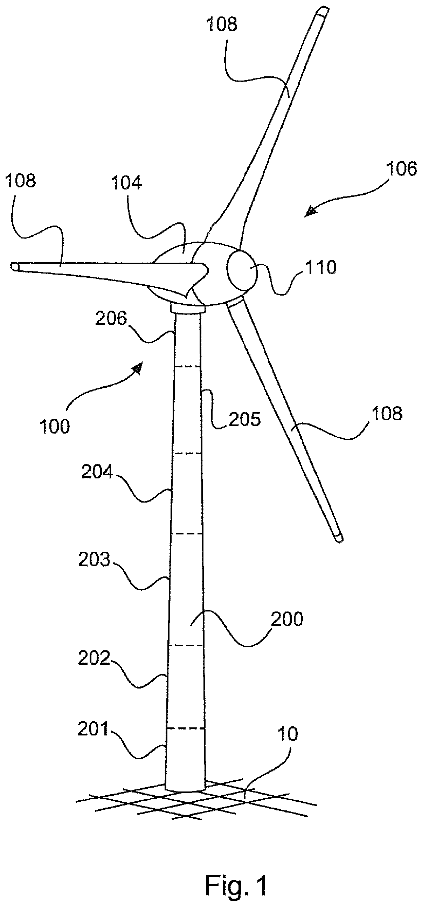

Fig. 1 zeigt eine schematische Darstellung einer Windenergieanlage gemäß der Erfindung. Die Windenergieanlage 100 weist einen Turm 200 und eine Gondel 104 auf. Der Turm 200 besteht aus einer Mehrzahl von Turmsegmenten 201 - 206. Die Turmsegmente 201 - 206 sind insbesondere aus Stahl hergestellt. An der Gondel 104 ist ein Rotor 106 mit (drei) Rotorblättern 108 und einem Spinner 110 vorgesehen. Der Rotor 106 wird im Betrieb durch den Wind in eine Drehbewegung versetzt und dreht somit auch einen Rotor oder Läufer eines elektrischen Generators in der Gondel 104. Die Pitchwinkel der Rotorblätter 108 können durch Pitchmotoren an den Rotorblattwurzeln der jeweiligen Rotorblätter 108 verändert werden.

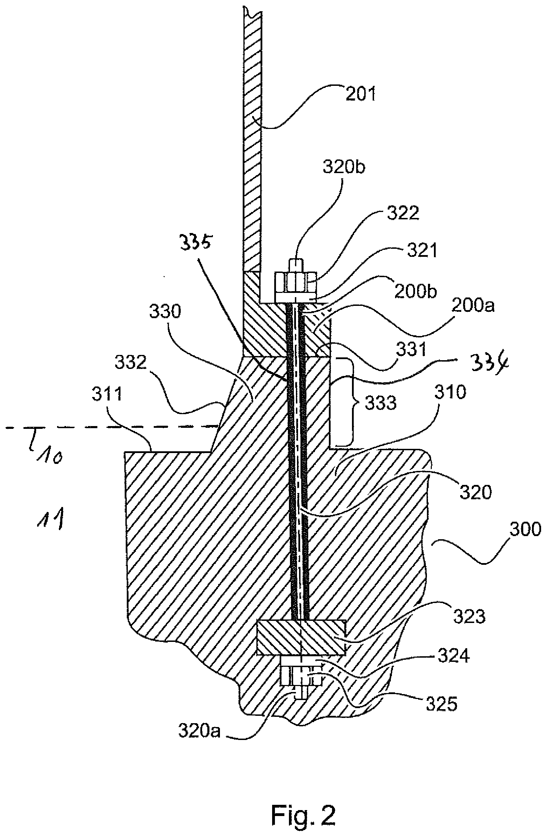

Fig. 2 zeigt eine schematische Schnittansicht eines Windenergieanlagen-Fundaments gemäß einem ersten Ausführungsbeispiel. Auf einem Fundament 300 wird ein unteres Turmsegment 201 aus Stahl platziert. Das untere Turmsegment 201 weist einen Flansch 200a mit einer Mehrzahl von Durchgangsbohrungen 200b auf.

Das Fundament 300 kann beispielsweise ein Fundament aus Ortbeton darstellen. Alternativ dazu kann auch ein Fertigteilbeton verwendet werden. Das Fundament 300 weist einen Fundamentabschnitt 310 sowie einen Betonfundamentsockel 330 auf. Der Fundamentabschnitt 310 weist eine obere Kante bzw. ein oberes Ende 311 auf. Der Betonfundamentsockel 330 ragt über die obere Kante 311 hinaus. An einer Oberseite 331 des Betonfundamentsockels 330 wird der Flansch 200a des unteren Turmsegmentes 201 platziert. Der Betonfundamentsockel 330 kann ringförmig ausgestaltet sein. Der Betonfundamentsockel 330 kann auf die obere Kante 311 des Fundamentabschnitts 310 aufbetoniert werden. Dieser Betonfundamentsockel 330 kann auch einen unteren Turmabschnitt ersetzen.

Der Betonsockel 310 ist an seiner Außenseite 332 konisch ausgestaltet und weist eine Höhe 333 oberhalb der Oberkante 311 auf. Eine Innenseite 334 des Betonsockels 330 kann gerade ausgestaltet sein. Der Betonfundamentsockel 300 weist eine Mehrzahl von Durchgangslöchern oder Bohrungen 335 zur Aufnahme von Spannelementen 320 auf. Der Sockel 330 ragt über ein Bodenniveau 10 des Bodens 11 im Bereich des Fundamentes (d. h. um das Fundament herum) heraus.

Die Durchgangsbohrungen 335 erstrecken sich entlang der gesamten Höhe des Betonfundamentsockels 330.

In dem Betonfundament 300 kann eine Mehrzahl von Gewindestangen 320 vorgesehen sein, wobei ein unteres Ende 320a der Gewindestange 320 z. B. mittels einer Platte 323, einer Scheibe 334 und einer (Sechskant)mutter 325 befestigt ist. Das andere bzw. obere Ende 320b der Gewindestange 320 ragt über das obere Ende 331 des Betonsockels 330 hinaus. Der Flansch 200a weist eine Mehrzahl von Durchgangsbohrungen 200b auf. Die Durchgangslöcher 200b werden über den oberen Enden 320b der Gewindestangen 320 platziert und der Flansch 200a kann z. B. mittels einer Mehrzahl von Scheiben 321 und Muttern 322 fixiert werden.

Der Betonsockel 330 sowie der Flansch 200a können ringförmig ausgestaltet sein.

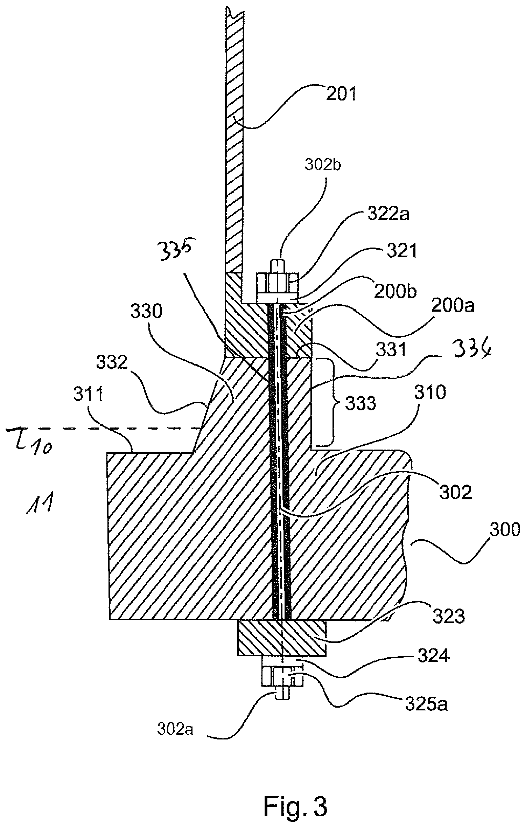

Fig. 3 zeigt eine Schnittansicht eines Windenergieanlagen-Fundaments gemäß einem zweiten Ausführungsbeispiel. Ein Betonfundament 300 weist einen ersten Betonfundamentabschnitt 310 mit einem oberen Ende 311 auf. Das Fundament 300 weist ferner einen Betonsockel 330 auf, welcher sich oberhalb des oberen Endes 311 erstreckt und ein oberes Ende 331 aufweist. Das obere Ende 331 des Sockels 330 kann insbesondere kreisförmig oder ringförmig ausgestaltet sein. Unterhalb des ersten Fundamentabschnitts 310 kann eine Platte 323 oder ein Ring 323 vorgesehen sein. In dem Fundament ist eine Mehrzahl von Spanneinheiten wie Spannlitzen 302 vorgesehen, deren untere Enden 302a mittels eines Festankers 325a gehalten werden. An dem oberen Ende 302b der Spannlitze 302 kann ein Spannanker 322a vorgesehen sein. Mittels der Spannlitze 320a, des Festankers 325a und des Spannankers 322a kann der untere Flansch 200a des unteren Turmsegments 201 an dem Fundament befestigt werden.

Der Betonsockel 310 ist an seiner Außenseite 332 konisch ausgestaltet und weist eine Höhe 333 oberhalb der Oberkante 311 auf. Eine Innenseite 334 des Betonsockels 330 kann gerade ausgestaltet sein. Der Betonfundamentsockel 300 weist eine Mehrzahl von Durchgangslöchern 335 zur Aufnahme von Spannelementen 320 auf. Die Durchgangsbohrungen 335 erstrecken sich entlang der gesamten Höhe des Betonfundamentsockels 330. Der Sockel 330 ragt über ein Bodenniveau 10 des Bodens 11 im Bereich des Fundamentes (d. h. um das Fundament herum) heraus.

Der Betonfundamentabschnitt 310 kann als Ortbeton oder als Fertigteil(beton)-Fundament ausgestaltet sein. Der Betonfundamentsockel 310 ist konisch ausgestaltet, d. h. der Außendurchmesser des unteren Endes 334 ist größer als der Außendurchmesser des oberen Endes 331. Durch den größeren Außendurchmesser am unteren Ende kann der Lasteintrag des Turms 200 in das Fundament 300 verbessert bzw. optimiert werden, während der Außendurchmesser des unteren Turmabschnitts reduziert werden kann, was vorteilhaft hinsichtlich des Transports ist.

Die Höhe 333 des Fundamentsockels 310 kann einer Höhe eines unteren Turmsegmentes (d. h. z. B. > 3 m) entsprechen, so dass das untere Turmsegment 201 zumindest teilweise durch einen höheren Fundamentsockel 310 ersetzt werden kann.

Durch die konische Ausgestaltung des Betonfundamentsockels 330 kann ein konstruktiv und/oder statisch notwendiger Durchmesser des Übergangs zwischen Sockel und Fundamentabschnitt vergrößert werden. Trotzdem kann der Durchmesser des oberen Endes des Sockels (und damit der Durchmesser des unteren Turmsegmentes) reduziert werden und zwar auf ein Maß unterhalb der maximalen Breite für Landtransporte.

Gemäß einem Aspekt der Erfindung wird eine Unterseite des Flansches 200a des unteren Turmsegmentes direkt auf einer Oberseite 331 des Betonfundamentsockels 330 platziert, welcher über eine obere Seite eines ersten Fundamentabschnittes 310 hinausragt.

Gemäß der Erfindung ist eine einreihige Verschraubung bzw. Verspannung des unteren Turmsegmentes 201 vorgesehen. Gemäß der Erfindung sind die Durchgangslöcher 200b in dem Flansch 200a innerhalb der Wandung des unteren Turmsegmentes vorgesehen, so dass die Verschraubung bzw. Verspannung innerhalb der Wandung des unteren Turmsegmentes vorgesehen ist und die Verspannung somit vor Witterungseinflüssen geschützt ist. Alternativ dazu ist auch eine zweireihige Verschraubung möglich. Dabei könnte der untere Flansch als T-Flansch ausgestaltet sein.

Optional kann die Oberseite 311 des Fundamentabschnitts einem Bodenniveau entsprechen, so dass der Sockel 330 über das Bodenniveau hinausragt.

## Patentansprüche

1. Windenergieanlage (100), mit
einem Fundament (300), wobei das Fundament (300) einen ersten Fundamentabschnitt (310) mit einer Oberseite (311) und einen Betonfundamentsockel (330) mit einer Oberseite (331) aufweist,
wobei die Oberseite (331) des Betonfundamentsockels (330) ringförmig ausgestaltet ist und über die Oberseite (311) des ersten Fundamentabschnitts (310) hinausragt,
einem Stahlturm (200) mit einer Mehrzahl von Turmsegmenten (201 - 206), wobei ein unteres Turmsegment (201) einen Flansch (200a) mit einer Mehrzahl von Durchgangsbohrungen (200b) aufweist,
wobei der Flansch (200a) auf einer Oberseite (331) des Betonfundamentsockels (330) platziert ist,
einer Mehrzahl von Spannelementen, wobei untere Enden (320a, 302a) der Spannelemente (320, 302) mittels erster Befestigungseinheiten (325, 325a) in oder unter dem ersten Fundamentabschnitt (310) befestigt sind,
wobei obere Enden (320b, 302b) der Spannelemente (320, 302) über das obere Ende (331) des Betonfundamentsockels hinausragen und durch die Durchgangsbohrungen (200b) verlaufen,
wobei die oberen Enden (320b, 302b) der Spannelemente (320b, 302b) mittels zweiter Befestigungseinheiten (321, 321a, 322) verspannt sind,
wobei die Außenseite (332) des Betonfundamentsockels (330) konisch ausgestaltet ist,
wobei in dem Betonfundamentsockel (330) und in dem Fundamentabschnitt (310) eine Mehrzahl von Bohrungen (335) zur Aufnahme der Spannelemente vorgesehen sind,
wobei die Bohrungen (335) im Bereich des Betonfundamentsockels (330) Durchgangsbohrungen (335) sind,
wobei eine Höhe (333) des Betonfundamentsockels (330) größer als 2 m ist.

2. Windenergieanlage nach Anspruch 1, wobei
die Spannelemente (320, 320a) als Gewindestangen (320) oder als Spannlitzen (320a) ausgestaltet sind.

3. Verfahren zum Errichten einer Windenergieanlage mit den Schritten:
Vorsehen eines Fundamentes (300), welches einen Fundamentabschnitt (310) mit einer Oberseite (311) und einem Betonfundamentsockel (330) mit einer Oberseite (311) aufweist,
wobei die Oberseite (311) des Betonfundamentsockels (330) ringförmig ausgestaltet ist und über die Oberseite (311) des ersten Fundamentabschnittes (310) hinausragt,
Platzieren eines Stahlturms (200) mit einer Mehrzahl von Turmsegmenten (211-206) auf dem Fundament,
wobei ein unteres Turmsegment (201) einen Flansch (200a) mit einer Mehrzahl von Durchgangsbohrungen (200b) aufweist,
Platzieren des Flansches (200a) auf der Oberseite (331) des Betonfundamentsockels (330),
Befestigen von unteren Enden (320a, 302a) einer Mehrzahl von Spannelementen mittels erster Befestigungseinheiten (325, 325a) in oder unter dem Fundamentabschnitt (310),
wobei die oberen Enden (320b, 302b) der Mehrzahl von Spannelementen (320, 302) über das obere Ende (331) des Betonfundamentsockels (330) hinausragen und durch die Durchgangsbohrungen (200b) in dem Flansch (200a) verlaufen,
Verspannen der oberen Enden (320b, 302b) der Mehrzahl von Spannelementen (320b, 302b) mittels zweiter Befestigungseinheiten (321, 321a, 322),
wobei die Außenseite (332) des Betonfundamentsockels (330) konisch ausgestaltet ist,
wobei in dem Betonfundamentsockel und in dem Fundamentabschnitt (310) eine Mehrzahl von Bohrungen (335) zur Aufnahme der Spannelemente vorgesehen sind,
wobei die Bohrungen (335) im Bereich des Betonfundamentsockels (330) Durchgangsbohrungen (335) sind,
wobei eine Höhe (333) des Betonfundamentsockels (330) größer als 2 m ist.

## Claims

1. A wind turbine (100) comprising
a foundation (300), wherein the foundation (300) has a first foundation portion (310) having a top side (311) and a concrete foundation pedestal (330) having a top side (331),
wherein the top side (331) of the concrete foundation pedestal (330) is annular and projects beyond the top side (311) of the first foundation portion (310),
a steel tower (200) having a plurality of tower segments (201 - 206), wherein a lower tower segment (201) has a flange (200a) having a plurality of through bores (200b),
wherein the flange (200a) is placed on a top side (331) of the concrete foundation pedestal (330),
a plurality of clamping elements , wherein lower ends (320a, 302a) of the clamping elements (320, 302) are fixed by means of first fixing units (325, 325a) in or under the first foundation portion (310),
wherein upper ends (320b, 302b) of the clamping elements (320, 302) project beyond the upper end (331) of the concrete foundation pedestal and extend through the through bores (200b),
wherein the upper ends (320b, 302b) of the clamping elements (320b, 302b) are braced by means of second fixing units (321, 321a, 322),
wherein the outward side (332) of the concrete foundation pedestal (330) is conical,
wherein a plurality of bores (335) for receiving the clamping elements is provided in the concrete foundation pedestal (330) and in the foundation portion (310),
wherein the bores (335) in the region of the concrete foundation pedestal (330) are through bores (335),
wherein a height (333) of the concrete foundation pedestal (330) is greater than 2 m.

2. A wind turbine according to claim 1 wherein
the clamping elements (320, 320a) are in the form of threaded rods (320) or stressed wire strands (320a).

3. A method of erecting a wind turbine comprising the steps:
providing a foundation (300) which has a foundation portion (310) having a top side (311) and a concrete foundation pedestal (330) having a top side (311),
wherein the top side (311) of the concrete foundation pedestal (330) is annular and projects beyond the top side (311) of the first foundation portion (310),
placing a steel tower (200) having a plurality of tower segments (211 - 206) on the foundation,
wherein a lower tower segment (201) has a flange (200a) having a plurality of through bores (200b),
placing the flange (200a) on the top side (331) of the concrete foundation pedestal (330),
fixing lower ends (320a, 302a) of a plurality of clamping elements by means of first fixing units (325, 325a) in or under the foundation portion (310),
wherein the upper ends (320b, 302b) of the plurality of clamping elements (320, 302) project beyond the upper end (331) of the concrete foundation pedestal (330) and extend through the through bores (200b) in the flange (200a),
bracing the upper ends (320b, 302b) of the plurality of clamping elements (320b, 302b) by means of second fixing units (321, 321a, 322),
wherein the outward side (332) of the concrete foundation pedestal (330) is conical,
wherein a plurality of bores (335) for receiving the clamping elements is provided in the concrete foundation pedestal and in the foundation portion (310),
wherein the bores (335) in the region of the concrete foundation pedestal (330) are through bores (335),
wherein a height (333) of the concrete foundation pedestal (330) is greater than 2 m.

## Revendications

1. Eolienne (100), avec
une fondation (300), dans laquelle la fondation (300) présente une première section de fondation (310) avec un côté supérieur (311) et une section de fondation en béton (330) avec un côté supérieur (331),
dans laquelle le côté supérieur (331) du socle de fondation en béton (330) est configuré de manière annulaire et dépasse au-delà du côté supérieur (311) de la première section de fondation (310),
une tour en acier (200) avec une multitude de segments de tour (201 - 206), dans laquelle un segment de tour inférieur (201) présente une bride (200a) avec une multitude d'alésages de passage (200b),
dans laquelle la bride (200a) est placée sur un côté supérieur (331) du socle de fondation en béton (330),
une multitude d'éléments de serrage,
dans laquelle des extrémités inférieures (320a, 302a) des éléments de serrage (320, 302) sont fixées dans ou sous la première section de fondation (310) au moyen de premières unités de fixation (325, 325a),
dans laquelle des extrémités supérieures (320b, 302b) des éléments de serrage (320, 302) dépassent au-delà de l'extrémité supérieure (331) du socle de fondation en béton et s'étendent à travers les alésages de passage (200b),
dans laquelle les extrémités supérieures (320b, 302b) des éléments de serrage (320b, 302b) sont serrées au moyen de deuxièmes unités de fixation (321, 321a, 322),
dans laquelle le côté extérieur (332) du socle de fondation en béton (330) est configuré de manière conique,
dans laquelle une multitude d'alésages (335) pour loger les éléments de serrage sont prévus dans le socle de fondation en béton (330) et dans la section de fondation (310),
dans laquelle les alésages (335) sont des alésages de passage (335) dans la zone du socle de fondation en béton (330),
dans laquelle une hauteur (333) du socle de fondation en béton (330) est supérieure à 2 m.

2. Eolienne selon la revendication 1, dans laquelle les éléments de serrage (320, 320a) sont configurés en tant que tiges filetées (320) ou en tant que torons de serrage (320a).

3. Procédé pour ériger une éolienne avec les étapes :
de prévision d'une fondation (300), laquelle présente une section de fondation (310) avec un côté supérieur (311) et un socle de fondation en béton (330) avec un côté supérieur (311),
dans lequel le côté supérieur (311) du socle de fondation en béton (330) est configuré de manière annulaire et dépasse au-delà du côté supérieur (311) de la première section de fondation (310),
de placement d'une tour en acier (200) avec une multitude de segments de tour (211 - 206) sur la fondation,
dans lequel un segment de tour inférieur (201) présente une bride (200a) avec une multitude d'alésages de passage (200b),
de placement de la bride (200a) sur le côté supérieur (331) du socle de fondation en béton (330),
de fixation d'extrémités inférieures (320a, 302a) d'une multitude d'éléments de serrage au moyen de premières unités de fixation (325, 325a) dans ou sous la section de fondation (310),
dans lequel les extrémités supérieures (320b, 302b) de la multitude d'éléments de serrage (320, 302) dépassent au-delà de l'extrémité supérieure (331) du socle de fondation en béton (330) et s'étendent à travers les alésages de passage (200b) dans la bride (200a),
de serrage des extrémités supérieures (320b, 302b) de la multitude d'éléments de serrage (320b, 302b) au moyen de deuxièmes unités de fixation (321, 321a, 322),
dans lequel le côté extérieur (332) du socle de fondation en béton (330) est configuré de manière conique,
dans lequel une multitude d'alésages (335) pour loger les éléments de serrage sont prévus dans le socle de fondation en béton et dans la section de fondation (310),
dans lequel les alésages (335) sont des alésages de passage (335) dans la zone du socle de fondation en béton (330) ,
dans lequel une hauteur (333) du socle de fondation en béton (330) est supérieure à 2 m.
